# EUROPÄISCHE PATENTANMELDUNG

(11) **EP 0 855 429 A1**
(43) Veröffentlichungstag der Anmeldung: **29.07.1998**
(21) Anmeldenummer: 98101212.3
(22) Anmeldetag: 23.01.1998
(51) Int. Cl.: C08L 71/00, C08G 65/40, C08L 81/00

(54) **Thermoplastische Formmassen mit verbesserter Chemikalienresistenz**

(30) Priorität: 24.01.1997 DE 19702587
(71) Anmelder: BASF AKTIENGESELLSCHAFT, 67056 Ludwigshafen (DE)
(72) Erfinder: Weber, Martin, 67487 Maikammer (DE); Weiser-Elbl, Karin, 69198 Schriesheim (DE)
(74) Vertreter: Kinzebach, Werner, Dr.

(57) **Zusammenfassung**

Die Erfindung betrifft thermoplastische Formmassen, enthaltend
A) wenigstens einen Polyarylenether und
B) wenigstens ein Polyarylensulfid, dadurch gekennzeichnet, daß die Formmasse eine die Chemikalienresistenz erhöhende Menge von
C) wenigstens einem Carboxylgruppen aufweisenden, modifizierten Polyarylenether mit wiederkehrenden Einheiten der Formeln I und II 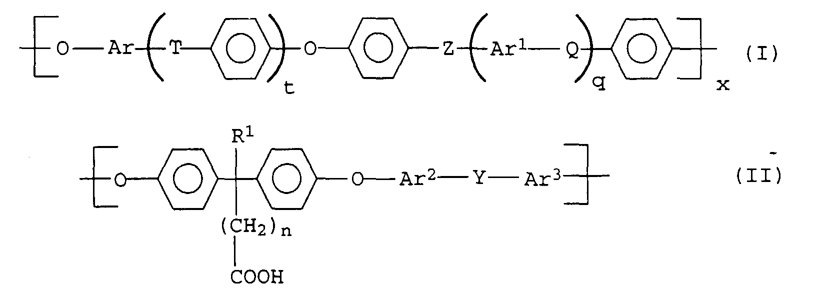 umfaßt,
   worin
   x für 0,5 oder 1 steht,
   t und q unabhängig voneinander für 0, 1, 2 oder 3 stehen,
   n für eine ganze Zahl von 0 bis 6 steht,
   Q, T, Y und Z unabhängig voneinander jeweils eine chemische Bindung oder eine Gruppe, ausgewählt unter -O-, -S-, -SO₂-, S=O, C=O, -N=N-, -R^{a}C=CR^{b}- und -CR^{c}R^{d}-, bedeuten, wobei
      R^{a}, R^{b}, R^{c} und R^{d} verschiedene Bedeutungen besitzen,
      mit der Maßgabe, daß mindestens eine der Gruppen T, Q und Z für -SO₂- oder C=O steht und, wenn t und q für 0 stehen, Z für -SO₂- oder C=O steht,
   Ar, Ar¹, Ar² und Ar³ unabhängig voneinander für C₆-C₁₈-Arylengruppen stehen, wobei diese gegebenenfalls mit C₁-C₁₂-Alkyl-, C₆-C₁₈-Aryl-, C₁-C₁₂-Alkoxygruppen oder Halogenatomen substituiert sind,
   R¹ für H, C₁-C₆-Alkyl, oder -(CH₂)ₙ-COOH steht; und
      wobei das molare Verhältnis von Einheiten der Formel I zu Einheiten der Formel II im Bereich von 0,05:99,95 bis 99,95:0,05 liegt,
   deren Verwendung zur Herstellung von Fasern, Filmen und Formkörpern, sowie die damit hergestellten Fasern, Filme und Formkörper.

## Beschreibung

Die vorliegende Erfindung betrifft hochtemperaturbeständige thermoplastische Formmassen auf Basis von Polyarylenethern und Polyarylensulfiden sowie die Verwendung derartiger Formmassen zur Herstellung von Fasern, Filmen und Formkörpern, wie beispielsweise Haushaltsartikel, elektronische Bauteile und medizinischtechnischen Geräte.

Polyarylenether sind hochtemperaturbeständige Werkstoffe, die sich insbesondere durch gute thermische Beständigkeit, gute mechanische Eigenschaften und gute Dimensionstabilität auszeichnen. Für viele Anwendungen sind jedoch die Verarbeitungseigenschaften der Polyarylenether, insbesondere die Fließfähigkeit nicht ausreichend. Weiterhin wird der Anwendungsbereich der Polyarylenether auch durch deren geringe Chemikalienbeständigkeit begrenzt.

Außerdem sind aus dem Stand der Technik Blends aus Polyarylenethern und Polyphenylensulfid (PPS) bekannt. So beschreibt beispielsweise die US 4,021,596 Blends aus Polyarylenethersulfon (PSU) und PPS, die im Vergleich zu PPS verbesserte Zähigkeit und im Vergleich zu PSU deutlich verbesserte Chemikalienbeständigkeit besitzen. Da PSU und PPS unverträglich sind (Cheung, M.-F., Golovy, A., Plummer, H.K. und van Oene, H., Polymer, 31, 2299 (1990)], ist die Zähigkeit der Blends deutlich schlechter im Vergleich zu PSU, weshalb diese Blends für viele Anwendungen ungeeignet sind.

Auch verstärkte Formmassen aus Polyarylenethern und PPS sind bekannt (z.B. EP-A-0 382 409). Der Zusatz von Polyarylenethersulfon wirkt sich dabei vorteilhaft auf die Verzugseigenschaften von glasfaserverstärktem PPS aus.

Obwohl die genannten Formmassen eine Reihe vorteilhafter Eigenschaften aufweisen, haben sie sich bisher noch nicht am Markt etablieren können, was insbesondere auf die Unverträglichkeit der Komponenten zurückzuführen ist.

Dem Fachmann ist außerdem bekannt, daß die Verträglichkeit von Polymerblends durch den Zusatz von Block- oder Pfropfcopolymeren verbessert werden kann. Für Blends aus Polyethersulfon (PES) und PPS ist dieser Weg z.B. in der US 4,678,831 beschrieben. Da die Synthese der Blockcopolymere aus PPS und PES-Einheiten jedoch sehr aufwendig ist, haben sich die unter Zusatz von PPS-block-PES hergestellten Blends aus PES und PPS ebenfalls nicht durchsetzen können. Ein weiterer Nachteil der Formmassen mit Blockcopolymeren ist deren reduzierte Fließfähigkeit.

Gegenstand der JP 1299 872 sind Formmassen aus PPS und PSU, wobei das Polysulfon Phenoxy- oder Phenolat-Endgruppen aufweisen kann. Als PPS-Komponente wird ein speziell vorbehandeltes Material verwendet, welches einen niedrigen Na-Ionengehalt aufweist. Die Blends, die ausgehend von dem PPS mit niedrigem Na-Ionengehalt hergestellt wurden, weisen unabhängig von der Art des eingesetzten Polyarylethers (Polyethersulfon mit Cl-Endgruppen, Polysulfon mit OH- oder O⁻Na⁺) verbesserte mechanische Eigenschaften auf, die erforderliche Vorbehandlung der PPS-Komponente ist jedoch aufwendig.

Die DE-A-44 20 643 befaßt sich mit dem Problem, Mischungen von Polyarylenethern und Polyarylensulfiden mit verbesserten mechanischen Eigenschaften und besserer Chemikalienbeständigkeit bei gleichzeitig verbessertem Verarbeitungsverhalten bereitzustellen. Es wir vorgeschlagen, als zusätzliche Komponente geringe Mengen OH-terminierter Polyarylenether einzusetzen. Die OH-terminierten Polyarylenether verbessern die Eigenschaften von Blends aus Polyarylenethern und Polyphenylensulfiden zwar wesentlich, jedoch besteht ein Bedarf an, vor allem in Bezug auf Chemikalienbeständigkeit, Festigkeit und Zähigkeit, weiter verbesserten Formmassen dieses Typs.

Der Erfindung lag somit die Aufgabe zugrunde, verbesserte Blends auf der Basis von Polyarylenethern und Polyarylensulfiden bereitzustellen. Insbesondere sollten die Elends eine verbesserte Chemikalienbeständigkeit bei gleichzeitig verbesserten mechanischen Eigenschaften, wie insbesondere verbesserte Zähigkeit und Festigkeit besitzen.

Überraschenderweise wurde nun gefunden, daß die Chemikalienbeständigkeit von Formkörpern, gefertigt aus Mischungen von Polyarylethern und Polyphenylensulfiden durch Zusatz von Carboxylgruppen-haltigen Polyarylenethern bei gleichzeitiger deutlicher Steigerung der Festigkeit und Zähigkeit wesentlich verbessert wird.

Als Maß für die Chemikalienresistenz der aus den erfindungsgemäßen Formmassen gefertigten Formkörpern gilt der Grad deren Massenabnahme pro Zeiteinheit nach Lagerung in einem organischen Lösungsmittel, insbesondere N-Methylpyrrolidon.

Ein erster Gegenstand der vorliegenden Erfindung betrifft somit thermoplastischen Formmassen, enthaltend
A) wenigstens einen Polyarylenether und
B) wenigstens ein Polyarylensulfid, dadurch gekennzeichnet, daß die Formmasse eine die Chemikalienresistenz erhöhende Menge von
C) wenigstens einem Carboxylgruppen aufweisenden, modifizierten Polyarylenether mit wiederkehrenden Einheiten der Formeln I und II 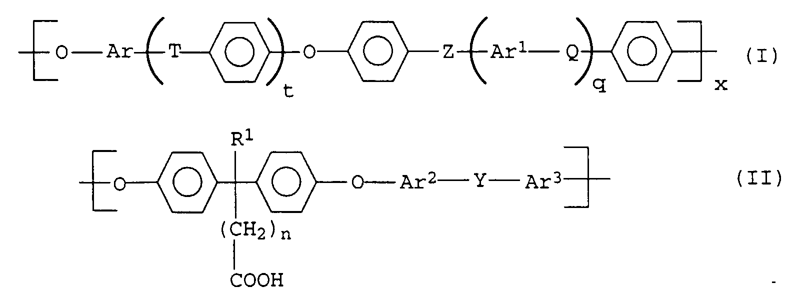 umfaßt,
   worin
x für 0,5 oder 1 steht,
t und q unabhängig voneinander für 0, 1, 2 oder 3 stehen,
n für eine ganze Zahl von 0 bis 6 steht,
Q, T, Y und Z unabhängig voneinander jeweils eine chemische Bindung oder eine Gruppe, ausgewählt unter -O-, -S-, -SO₂-, S=O, C=O, -N=N-, R^{a}C=CR^{b}- und CR^{c}R^{d}-, bedeuten, wobei
   R^{a} und R^{b} unabhängig voneinander jeweils für ein Wasserstoffatom oder eine C₁-C₁₂-Alkylgruppe stehen und
   R^{c} und R^{d} unabhängig voneinander jeweils für ein Wasserstoffatom oder eine C₁-C₁₂-Alkyl-, C₁-C₁₂-Alkoxy- oder C₆-C₁₈-Arylgruppe stehen, wobei R^{c} und R^{d} gegebenenfalls unabhängig voneinander mit Fluor- und/oder Chloratomen substituiert sind oder gegebenenfalls zusammen mit dem C-Atom an das sie gebunden sind, eine C₃-C₁₂-Cycloalkylgruppe bilden, die gegebenenfalls mit einer oder mehreren C₁-C₆-Alkylgruppen substituiert ist,
   mit der Maßgabe, daß mindestens eine der Gruppen T, Q und Z für -SO₂- oder C=O steht und, wenn t und q für 0 stehen, Z für -SO₂- oder C=O steht,
Ar, Ar¹, Ar² und Ar³ unabhängig voneinander für C₆-C₁₈-Arylengruppen stehen, wobei diese gegebenenfalls mit C₁-C₁₂-Alkyl-, C₆-C₁₈-Aryl-, C₁-C₁₂-Alkoxygruppen oder Halogenatomen substituiert sind,
R¹ für H, C₁-C₆-Alkyl, oder -(CH₂)ₙ-COOH steht; und
   wobei das molare Verhältnis von Einheiten der Formel I zu Einheiten der Formel II im Bereich von 0,05:99,95 bis 99,95:0,05 liegt.

Insbesondere weisen die modifizierten Polyarylenether C) einen Anteil freier Säuregruppen von etwa 0,05 bis 25 Mol-%, bestimmt durch ¹H-NMR, auf.

Weiterhin sind modifizierte Polyarylenether C) bevorzugt, welche Strukturelemente der Formel II umfassen, worin Ar² und Ar³ jeweils für 1,4-Phenylen, Y für SO₂, R¹ für C₁-C₆-Alkyl und n für eine ganze Zahl von 1 bis 6 steht.

Die in den erfindungsgemäßen Formmassen verwendeten nicht-modifizierten Polyarylenether A) sind vorzugsweise aus wiederkehrenden Strukturelementen obiger Formel I aufgebaut, wobei Ar, Ar¹, T, Q, Z, t und q die oben angegebenen Bedeutungen besitzen.

Vorzugsweise ist der erfindungsgemäß verwendete nicht-modifizierte Polyarylenether A) durch einen Gehalt an OH-Endgruppen gekennzeichnet, der weniger als etwa 0,03 Gew.-%, bezogen auf das zahlenmittlere Molekulargewicht der Polyarylenetherkomponente A, beträgt.

Die in den erfindungsgemäßen Formmassen verwendete Polyphenylensulfidkomponente ist vorzugsweise durch einen Gehalt von mindestens 30 Mol-% an wiederkehrenden Einheiten der Formel IV 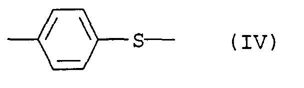 gekennzeichnet.

Eine erfindungsgemäß bevorzugte Formmasse ist dadurch gekennzeichnet, daß sie, jeweils bezogen auf das Gesamtgewicht der thermoplastischen Formmasse,
A) etwa 5 bis etwa 95 Gew.-% wenigstens eines Polyarylenethers,
B) etwa 4 bis etwa 75 Gew.-% wenigstens eines Polyarylensulfids,
C) etwa 1 bis etwa 50 Gew.-% wenigstens eines Polyarylenethers mit Carboxylgruppen,
D) 0 bis etwa 60 Gew.-% wenigstens eines faser- oder teilchenförmigen Füllstoffs oder deren Mischungen,
E) 0 bis etwa 45 Gew.-% wenigstens eines schlagzähmodifizierenden Kautschuks, und
F) 0 bis etwa 40 Gew.-% wenigstens eines üblichen Zusatzes enthält.

In den erfindungsgemäß verwendeten funktionalisierten oder nicht-funktionalisierten Polyarylenetherkomponenten mit Einheiten der Formeln I und/oder II gelten die folgenden Bedeutungen:

Erfindungsgemäß verwendbare Alkylreste umfassen geradkettige oder verzweigte, gesättigte Kohlenstoffketten mit bis zu 12 Kohlenstoffatomen. Beispielsweise können folgende Reste genannt werden: C₁-C₆-Alkylreste, wie Methyl, Ethyl, n-Propyl, i-Propyl, n-Butyl, sec.-Butyl, 2- oder 3-Methyl-pentyl; und längerkettige Reste, wie unverzweigtes Heptyl, Octyl, Nonyl, Decyl, Undecyl, Lauryl und die ein- oder mehrfach verzweigten Analoga davon.

Der Alkylteil von erfindungsgemäß brauchbaren Alkoxygruppen ist wie oben angegeben definiert.

Erfindungsgemäß verwendbare Cycloalkylreste umfassen insbesondere C₃-C₁₂-Cycloalkylreste, wie z.B. Cyclopropyl, Cyclobutyl, Cyclopentyl, Cyclohexyl, Cycloheptyl, Cyclooctyl, Cyclopropylmethyl, Cyclopropylethyl, Cyclopropylpropyl, Cyclobutylmethyl, Cyclobutylethyl, Cyclopentylethyl, -propyl, -butyl, -pentyl, -hexyl, Cyclohexylmethyl, -dimethyl, -trimethyl und dergleichen.

Beispiele für erfindungsgemäß brauchbare C₆-C₁₈-Arylengruppen sind Phenylengruppen, wie 1,2-, 1,3- und 1,4-Phenylen, Biphenylengruppen, Naphthylengruppen, wie z.B. 1,6-, 1,7-, 2,6- und 2,7-Naphthylen, sowie die von Anthracen, Phenanthren und Naphthacen abgeleiteten Brückengruppen.

Die erfindungsgemäßen Formmassen enthalten nicht-modifizierten Polyarylenether A) in einem Anteil von etwa 5 bis 95, vorzugsweise etwa 20 bis 90 Gew.-%.

Erfindungsgemäß brauchbare Polyarylenether (Komponente A) sind aufgebaut aus wiederkehrenden Einheiten der Formel I 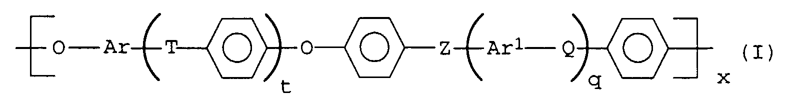 worin Ar, Ar¹, T, Z, Q, t, x und q die oben angegebenen Bedeutungen besitzen. Es können auch verschiedene Einheiten der Formel I statistisch oder in Blöcken verteilt im Polyarylenether vorliegen.

Die Herstellung erfindungsgemäß brauchbarer Polyarylenether A kann beispielsweise in Anlehnung an GB 1 152 035 und US 4,870,153 erfolgen, worauf hiermit ausdrücklich Bezug genommen wird. Geeignete Verfahrensbedingungen zur Synthese von Polyarylenethern sind beispielsweise in EP-A- 0 113 112 und EP-A- 0 135 130 beschrieben. Besonders geeignet ist die Umsetzung der Monomeren in aprotischen polaren Lösungsmitteln in Gegenwart von wasserfreiem Alkalicarbonat. Eine besonders bevorzugte Kombination ist N-Methylpyrrolidon als Lösungsmittel und Kaliumcarbonat als Katalysator. Die Umsetzung in der Schmelze ist ebenfalls bevorzugt. Die darin beschriebene Einführung von terminalen Anhydridgruppen ist für die vorliegende Erfindung jedoch nicht zwingend erforderlich. Beispiele für geeignete Polyarylenether A sind solche, mit mindestens einer der folgenden wiederkehrenden Struktureinheiten I₁ bis I₂₉:

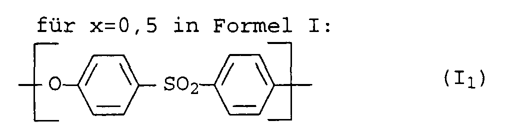

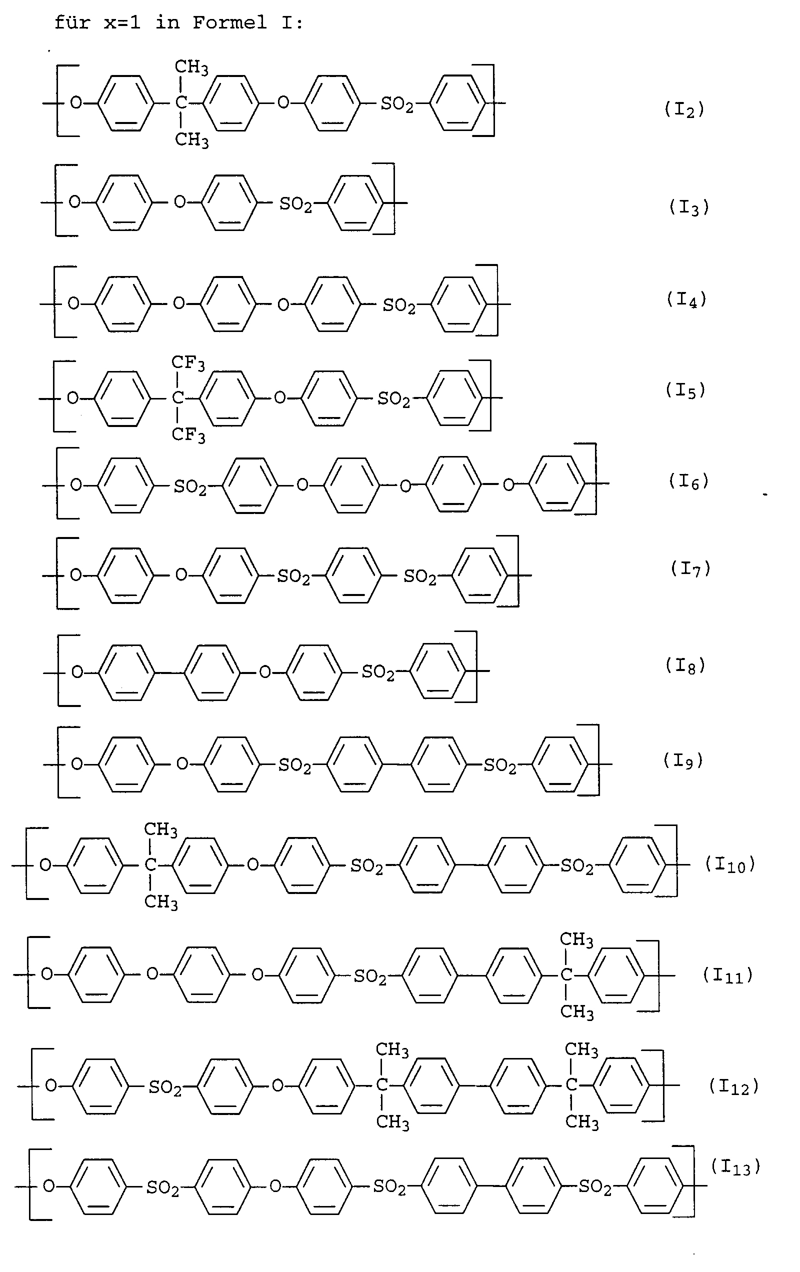

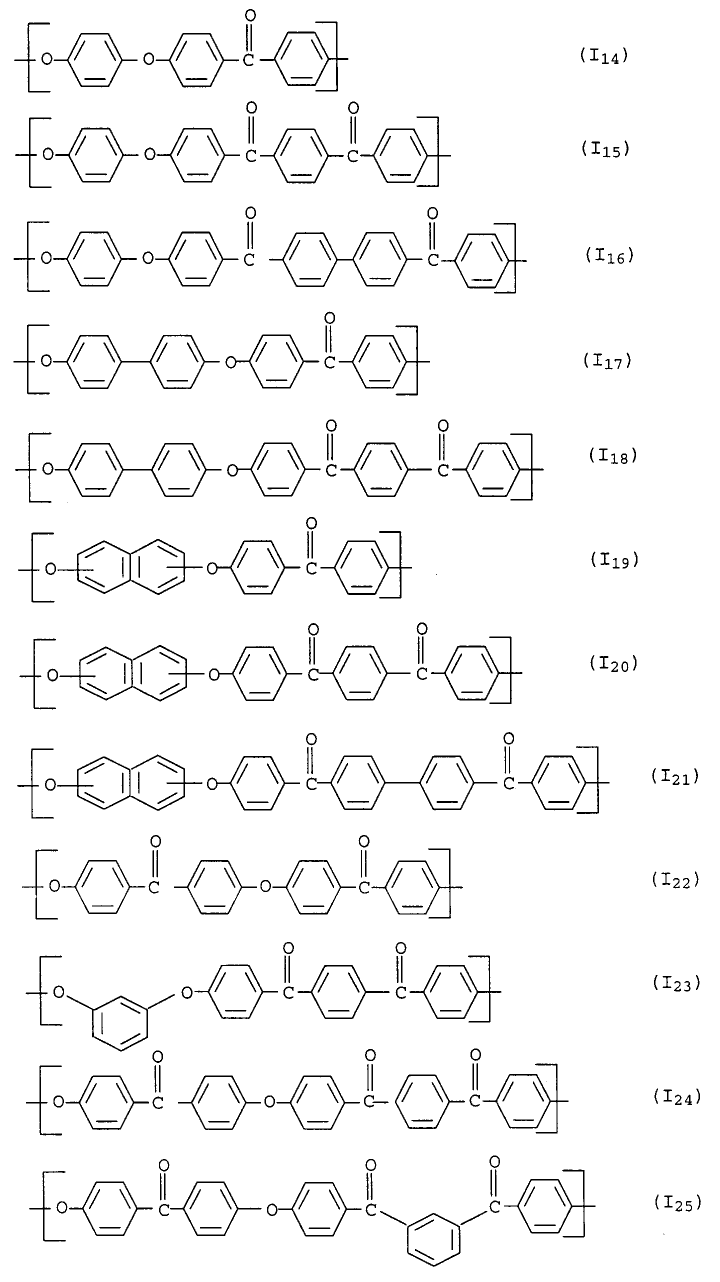

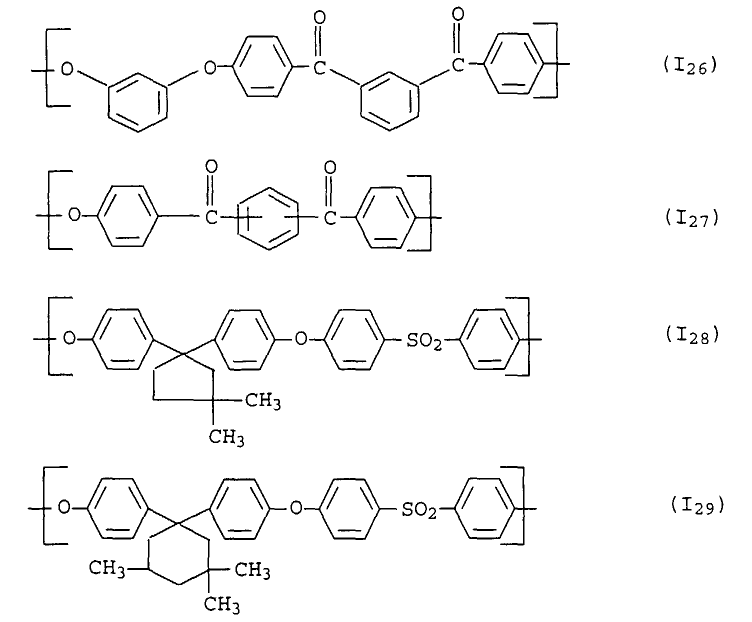

Als besonders bevorzugte Einheiten der Formel I sind zu nennen Einheiten der Formeln I₁ und I₂, welche einzeln oder im Gemisch vorliegen können.

Die Polyarylenether A können auch Co- oder Blockcopolymere sein, in denen Polyarylenethersegmente und Segmente von anderen thermoplastischen Polymeren, wie Polyamiden, Polyestern, aromatischen Polycarbonaten, Polyestercarbonaten, Polysiloxanen, Polyimiden oder Polyetherimiden vorliegen. Die Molekulargewichte (Zahlenmittel) der Blöcke- bzw. der Pfropfarme in den Copolymeren liegen in der Regel im Bereich von 1 000 bis 30 000 g/mol. Die Blöcke unterschiedlicher Struktur können alternierend oder statistisch angeordnet sein. Der Gewichtsanteil der Polyarylenether in den Co- oder Blockcopolymeren beträgt im allgemeinen mindestens 10 Gew.-%. Der Gewichtsanteil der Polyarylenether kann bis zu 97 Gew.-% betragen. Bevorzugt werden Co- oder Blockcopolymere mit einem Gewichtsanteil an Polyarylenether mit bis zu 90 Gew.-%. Besonders bevorzugt werden Co- oder Blockcopolymere mit 20 bis 80 Gew.-% Polyarylenether.

Im allgemeinen weisen die Polyarylenether mittlere Molekulargewichte Mₙ (Zahlenmittel) im Bereich von 5 000 bis 60 000 g/mol und relative Viskositäten von 0,20 bis 0,95 dl/g auf. Die relativen Viskositäten werden je nach Löslichkeit der Polyarylenether entweder in 1 gew.-%iger N-Methylpyrrolidon-Lösung, in Mischungen aus Phenol und Dichlorbenzol oder in 96%iger Schwefelsäure bei jeweils 20°C bzw. 25°C gemessen.

Der Anteil der Komponente B an den erfindungsgemäßen Formmassen beträgt etwa 4 bis 75 Gew.-%. Bevorzugt werden Formmassen, die etwa 8,5 bis 70 Gew.-% der Komponente B enthalten.

Als Komponente B können prinzipiell alle bekannten, linearen oder verzweigten, Polyarylensulfide eingesetzt werden. Bevorzugt werden jedoch Polyarylensulfide, die mehr als 30 Mol-%, insbesondere mehr als 70 Mol-% wiederkehrende Einheiten 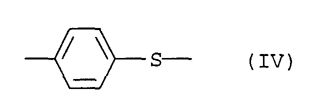 enthalten. Als weitere wiederkehrende Einheiten sind beispielsweise zu nennen: 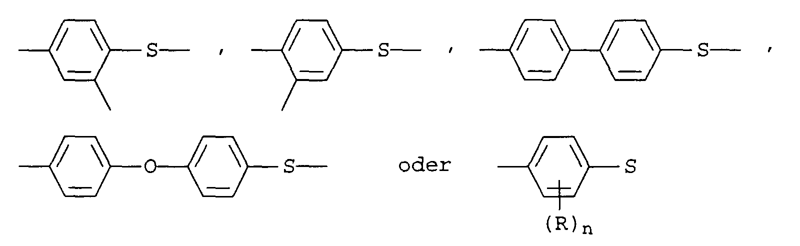 worin R einen C₁-C₁₂-Alkylrest, bevorzugt Methyl, und n entweder 1 oder 2 bedeutet. Die Polyarylenethersulfide können sowohl statistische Copolymere als auch Blockcopolymere sein. Ganz besonders bevorzugte Polyphenylensulfide enthalten 100 mol-% Einheiten IV.

Als Endgruppen kommen z.B. Halogen, Thiol oder Hydroxy, bevorzugt Halogen, in Betracht.

Die bevorzugten Polyarylensulfide weisen ein Mₙ von 1000 bis 100 000 g/mol auf.

Die Synthese der Polyarylensulfide ist dem Fachmann aus einer Reihe von Publikationen (z.B. Critchley, J.P., Knight, G.J. und Wright, W.W., "Heat-Resistant Polymers" S. 151-160, (1983), Plenum Press, New York) und Patentschriften (z.B. GB-B-962 941, US 2,513,188, US 3,354,129, US 3,699,087 sowie 4,645,826) bekannt, worauf hiermit ausdrücklich Bezug genommen wird.

Der Anteil der Komponente C in den erfindungsgemäßen thermoplastischen Formmassen beträgt etwa 1 bis 50 Gew.-%, vorzugsweise etwa 1,5 bis 30 Gew.-%.

Die in den erfindungsgemäßen Formmassen zur Verbesserung der Chemikalienbeständigkeit verwendeten, seitenständig carboxylierten Polyarylenether (Komponente C) sind an sich bekannte Verbindungen oder nach bekannten Verfahren herstellbar.

Beispielsweise sind die erfindungsgemäß modifizierten Polyarylenether zugänglich in Anlehnung an die EP-A-0 185 237 sowie nach den von I.W. Parsons et al., in Polymer, 34, 2836 (1993) und T. Koch, H. Ritter, in Macromol. Phys. 195, 1709 (1994) beschriebenen Verfahren.

Die Polyarylenether sind demnach beispielsweise erhältlich durch Polykondensation von Verbindungen der allgemeinen Formel III 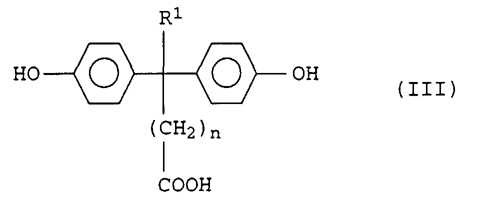 worin R¹ und n die oben angegebenen Bedeutungen besitzen mit wenigstens einer weiteren, z.B. chlorfunktionalisierten aromatischen Verbindung, wie z.B. Bis-(4-chlorphenyl)sulfon, und gegebenenfalls weiteren hydroxyfunktionalisierten Verbindungen, wie z.B. Bisphenol A, und/oder Bisphenol S. Geeignete Reaktionspartner sind dem Fachmann allgemein bekannt.

Zur Herstellung der modifizierten Polyarylenether C können prinzipiell auch die für Polyarylenether A verwendeten Methoden eingesetzt werden, wobei die Lösungspolymerisation in dipolar aprotischen Lösungsmitteln unter Baseneinwirkung bevorzugt wird.

Obige Ausführungen zu bevorzugten Strukturelementen für Polyarylenether A gelten entsprechend für die Strukturelemente I der modifizierten Polyarylenether C.

Beispiele für geeignete Strukturelemente II sind: 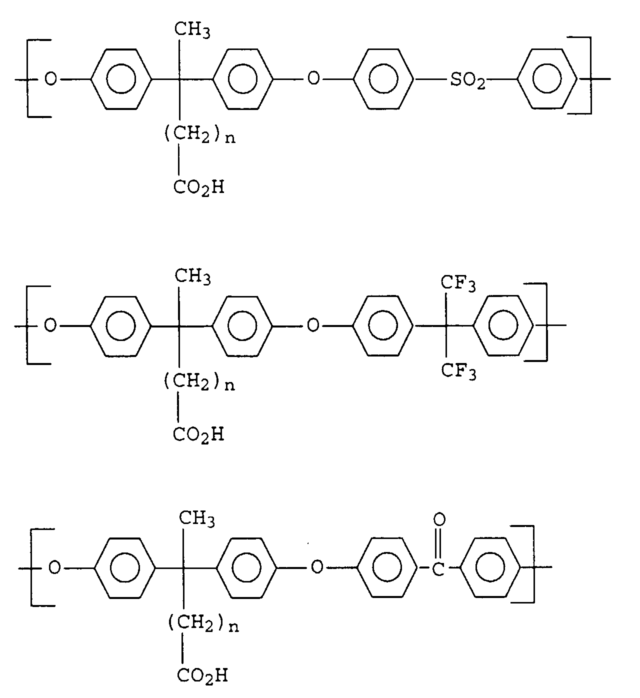 worin n jeweils für eine ganze Zahl von 0 bis 4 steht.

Die erfindungsgemäß verwendeten säuregruppenhaltigen Polyarylenether C weisen Viskositätszahlen von etwa 15 bis 80 ml/g auf (bestimmt in 1%iger NMP-Lösung bei 25°C). Der Anteil freier Säuregruppen in der Komponente C beträgt 0,05 bis 25, vorzugsweise 0,1 bis 20 und insbesondere 0,1 bis 15 Mol-%, wobei die Bestimmung des Anteils an Säuregruppen, wie bei I.W. Parsons et al., Polymer, 34, 2836 (1993) beschrieben, durch ¹H-NMR erfolgt.

### Komponente D

Als Komponente D enthalten die erfindungsgemäßen Formmassen faser- oder teilchenförmige Füll- oder Verstärkungsstoffe in einem Anteil von 0 bis etwa 60 Gew.-%, vorzugsweise etwa 0 bis 30 Gew.-%.

Bevorzugte faserförmige Füll- oder Verstärkungsstoffe sind Kohlenstoffasern, Kaliumtitanatwhisker, Aramidfasern und besonders bevorzugt Glasfasern. Bei der Verwendung von Glasfasern können diese zur besseren Verträglichkeit mit dem Matrixmaterial mit einer Schlichte und einem Haftvermittler ausgerüstet sein. Im allgemeinen haben die verwendeten Kohlenstoff- und Glasfasern einen Durchmesser im Bereich von 6 bis 20 µm.

Die Einarbeitung der Glasfasern kann sowohl in Form von Kurzglasfasern als auch in Form von Endlossträngen (Rovings) erfolgen. Im fertigen Spritzgußteil liegt die mittlere Länge der Glasfasern vorzugsweise im Bereich von 0,08 bis 0,5 mm.

Kohlenstoff- oder Glasfasern können auch in Form von Geweben, Matten oder Glasseidenrovings eingesetzt werden.

Als teilchenförmige Füllstoffe eignen sich amorphe Kieselsäure, Magnesiumcarbonat (Kreide), gepulverter Quarz, Glimmer, Talkum, Feldspat, Glaskugeln und insbesondere Calciumsilikate wie Wollastonit und Kaolin (insbesondere kalzinierter Kaolin).

Bevorzugte Kombinationen von Füllstoffen sind z.B. 20 Gew.-% Glasfasern mit 15 Gew.-% Wollastonit und 15 Gew.-% Glasfasern mit 15 Gew.-% Wollastonit.

### Komponente E

Neben den Komponenten A bis C und gegebenenfalls D können die erfindungsgemäßen Formmassen auch bis etwa 45, vorzugsweise etwa 2 bis 25 Gew.-% eines schlagzähmodifizierenden Kautschuks E enthalten. Es können übliche Schlagzähmodifier verwendet werden, die für Polyarylenether und/oder Polyphenylensulfid geeignet sind.

Als Kautschuke, die die Zähigkeit der Blends erhöhen, seien z.B. folgende genannt:

EP- bzw. EPDM-Kautschuke, die mit funktionellen Gruppen gepfropft wurden. Geeignete Pfropfreagentien sind beispielsweise Maleinsäureanhydrid, Itaconsäure, Acrylsäure, Glycidylacrylat und Glycidylmethacrylat.

Diese Monomeren können in der Schmelze oder in Lösung, gegebenenfalls in Gegenwart eines Radikalstarters, wie Cumolhydroperoxid, auf das Polymer aufgepfropft werden.

Weiterhin seien Copolymere von α-Olefinen genannt. Bei den α-Olefinen handelt es sich üblicherweise um Monomere mit 2 bis 8 C-Atomen, vorzugsweise Ethylen und Propylen. Als Comonomere haben sich Alkylacrylate oder Alkylmethacrylate, die sich von Alkoholen mit 1 bis 8 C-Atomen, vorzugsweise von Ethanol, Butanol oder Ethylhexanol, ableiten sowie reaktive Comonomere wie Acrylsäure, Methacrylsäure, Maleinsäure, Maleinsäureanhydrid oder Glycidyl(meth)acrylat und weiterhin Vinylester, insbesondere Vinylacetat, als geeignet erwiesen. Mischungen verschiedener Comonomere können ebenfalls eingesetzt werden. Als besonders geeignet haben sich Copolymere des Ethylens mit Ethyl- oder Butylacrylat und Acrylsäure und/oder Maleinsäureanhydrid erwiesen.

Die Copolymeren können in einem Hochdruckprozeß bei einem Druck von 400 bis 4500 bar oder durch Pfropfen der Comonomeren auf das Poly-α-Olefin hergestellt werden. Der Anteil des α-Olefins an dem Copolymeren liegt z.B. im Bereich von 99,95 bis 55 Gew.-%.

Als weitere Gruppe von geeigneten Elastomeren sind Kern-Schale-Pfropfkautschuke zu nennen. Hierbei handelt es sich um in Emulsion hergestellte Pfropfkautschuke, die aus mindestens einem harten und einem weichen Bestandteil bestehen. Unter einem harten Bestandteil versteht man üblicherweise ein Polymerisat mit einer Glastemperatur von mindestens 25°C, unter einem weichen Bestandteil ein Polymerisat mit einer Glastemperatur von höchstens 0°C. Diese Produkte weisen eine Struktur aus einem Kern und mindestens einer Schale auf, wobei sich die Struktur durch die Reihenfolge der Monomerzugabe ergibt. Die weichen Bestandteile leiten sich z.B. von Butadien, Isopren, Alkylacrylaten, Alkylmethacrylaten oder Siloxanen und gegebenenfalls weiteren Comonomeren ab. Geeignete Siloxankerne können beispielsweise ausgehend von cyclischen oligomeren Octamethyltetrasiloxan oder Tetravinyltetraznethyltetrasiloxan hergestellt werden. Diese können beispielsweise mit γ-Mercaptopropylmethyldimethoxysilan in einer ringöffnenden kationischen Polymerisation, vorzugsweise in Gegenwart von Sulfonsäuren, zu den weichen Siloxankernen umgesetzt werden. Die Siloxane können auch vernetzt werden, indem z.B. die Polymerisationsreaktion in Gegenwart von Silanen mit hydrolysierbaren Gruppen wie Halogen oder Alkoxygruppen wie Tetraethoxysilan, Methyltrimethoxysilan oder Phenyltrimethoxysilan durchgeführt wird. Als geeignete Comonomere sind hier z.B. Styrol, Acrylnitril und vernetzende oder pfropfaktive Monomere mit mehr als einer polymerisierbaren Doppelbindung wie Diallylphthalat, Divinylbenzol, Butandioldiacrylat oder Triallyl(iso)cyanurat zu nennen. Die harten Bestandteile leiten sich i.a. von Styrol, α-Methylstyrol und deren Copolymerisaten ab, wobei hier als Comonomere vorzugsweise Acrylnitril, Methacrylnitril und Methylmethacrylat aufzuführen sind.

Bevorzugte Kern-Schale-Pfropfkautschuke enthalten einen weichen Kern und eine harte Schale oder einen harten Kern, eine erste weiche Schale und mindestens eine weitere harte Schale. Der Einbau von funktionellen Gruppen wie Carbonyl-, Carbonsäure, Säureanhydrid-, Säureamid-, Säureimid-, Carbonsäureester-, Amino-, Hydroxyl-, Epoxy-, Oxazolin-, Urethan-, Harnstoff-, Lactam- oder Halogenbenzylgruppen, erfolgt hierbei vorzugsweise durch den Zusatz geeigneter funktionalisierter Monomere bei der Polymerisation der letzten Schale. Geeignete funktionalisierte Monomere sind beispielsweise Maleinsäure, Maleinsäureanhydrid, Mono- oder Diester der Maleinsäure, tertiär-Butyl(meth)acrylat, Acrylsäure, Glycidyl(meth)acrylat und Vinyloxazolin. Der Anteil an Monomeren mit funktionellen Gruppen beträgt z.B. 0,1 bis 25 Gew.-%, vorzugsweise 0,25 bis 15 Gew.-%, bezogen auf das Gesamtgewicht des Kern-Schale-Pfropfkautschuks. Das Gewichtsverhältnis von weichen zu harten Bestandteilen beträgt z.B. 1:9 bis 9:1, bevorzugt 3:7 bis 8:2.

Derartige Kautschuke sind an sich bekannt und beispielsweise in der EP-A 208 187 beschrieben.

Eine weitere Gruppe von geeigneten Schlagzähmodifiern sind thermoplastische Polyester-Elastomere. Unter Polyesterelastomeren werden dabei segmentierte Copolyetherester verstanden, die langkettige Segmente, die sich in der Regel von Poly(alkylen)etherglykolen ableiten und kurzkettige Segmente, die sich von niedermolekularen Diolen und Dicarbonsäuren ableiten, enthalten. Derartige Produkte sind an sich bekannt und in der Literatur, z.B. in der US-A 3,651,014, beschrieben. Auch im Handel sind entsprechende Produkte unter den Bezeichnungen Hytrel® (Du Pont), Arnitel® (Akzo) und Pelprene® (Toyobo Co. Ltd.) erhältlich.

Selbstverständlich können auch Mischungen verschiedener Kautschuke eingesetzt werden.

### Komponente F

Neben den beschriebenen Bestandteilen A bis C und gegebenenfalls D und/oder E können die erfindungsgemäßen Formmassen als Komponente F noch etwa 0 bis 40 Gew.-%, vorzugsweise etwa 0 bis 30 Gew.-% Flammschutzmittel, Pigmente und Stabilisatoren enthalten.

Die erfindungsgemäßen Formmassen können mach an sich bekannten Verfahren, beispielsweise Extrusion, hergestellt werden. Die erfindungsgemäßen Formmassen können z.B. hergestellt werden, indem man die Ausgangskomponenten in üblichen Mischvorrichtungen wie Schneckenextrudern, vorzugsweise Zweischneckenextrudern, Brabender-Mischer oder Banburry-Mischer sowie Knetern mischt und anschließend extrudiert. Nach der Extrusion wird das Extrudat abgekühlt und zerkleinert. Die Reihenfolge der Mischung der Komponenten kann variiert werden, so können zwei oder gegebenenfalls drei Komponenten vorgemischt werden, es können aber auch alle Komponenten gemeinsam gemischt werden.

Um eine möglichst homogene Durchmischung zu erhalten, ist eine intensive Durchmischung vorteilhaft. Dazu sind im allgemeinen mittlere Mischzeiten von 0,2 bis 30 min bei Temperaturen von 280 bis 400°C, bevorzugt 290 bis 390°C, erforderlich. Nach der Extrusion wird das Extrudat in der Regel abgekühlt und zerkleinert.

Die erfindungsgemäßen Formmassen zeichnen sich durch sehr gute Chemikalienbeständigkeit, gute Festigkeit und gute Zähigkeit aus.

Aufgrund der genannten Eigenschaften und der hohen Wärmeformbeständigkeit sind diese Formmassen zur Herstellung von Formkörpern geeignet, die z.B. im Haushalts-, Elektro- und Medizintechnikbereich sowie Kraftfahrzeug- und Maschinenbau eingesetzt werden können.

Die Erfindung wird nun anhand folgender nicht-limitierender Äusführungsbeispiele näher erläutert.

### Beispiele

Die Viskositätszahl der Produkte wird in 1%iger Lösung von N-Methylpyrrolidon bei 25°C bestimmt. Der Anteil der Einheiten mit Säuregruppen in den Copolyarylethern C wurde wie bei I.W. Parsons et al., Polymer, 34, 2836 (1993) beschrieben, durch ¹H-NMR-Spektroskopie ermittelt.

### Herstellungsbeispiel 1:

### Carboxylseitenketten aufweisender Copolyarylether C₁

Unter Stickstoffatmosphäre wurden 5,742 kg Dichlordiphenylsulfon, 4,374 kg Bisphenol A und 112 g 4,4-Bis-(4-hydroxyphenyl)valeriansäure in 29 kg N-Methylpyrrolidon gelöst und mit 2,820 kg wasserfreiem Kaliumcarbonat versetzt.

Die Reaktionsmischung wurde bei einem Druck von 300 mbar unter ständigem Abdestillieren des Reaktionswassers und N-Methylpyrrolidon zunächst 1 h auf 180°C erhitzt und dann 6 h bei 190°C weiter umgesetzt.

Nach Zugabe von 40 kg N-Methylpyrrolidon wurden die anorganischen Bestandteile abfiltriert. Durch Zugabe von 50 ml Eisessig wurden basische Gruppen neutralisiert, anschließend wurde das Polymer durch Fällung in Wasser isoliert. Nach 3-maliger Extraktion mit Wasser wurde das Produkt bei 140°C im Vakuum getrocknet. Es wurde ein weißes Pulver erhalten.

Der Anteil an Einheiten mit Säuregruppen wurde mittels ¹H-NMR zu 1,2 mol-% bestimmt, die Viskositätszahl des Produkts betrug 38,1 ml/g.

### Herstellungsbeispiel 2:

### Carboxylseitenketten aufweisender Copolyarylether C₂

Unter Stickstoffatmosphäre wurden 5,472 kg Dichlordiphenylsulfon, 4,240 kg Bisphenol A und 280 g 4,4-Bis-(4-hydroxyphenyl)valeriansäure in 29 kg N-Methylpyrrolidon gelöst und mit 2,820 kg wasserfreiem Kaliumcarbonat versetzt.

Die Reaktionsmischung wurde bei einem Druck von 300 mbar unter ständigem Abdestillieren des Reaktionswassers und N-Methylpyrrolidon zunächst 1 h auf 180°C erhitzt und dann 6 h bei 190°C weiter umgesetzt.

Nach Zugabe von 40 kg N-Methylpyrrolidon wurden die anorganischen Bestandteile abfiltriert. Durch Zugabe von 150 ml Eisessig wurden basische Gruppen neutralisiert, anschließend wurde das Polymer durch Fällung in Wasser isoliert. Nach 3-maliger Extraktion mit Wasser wurde das Produkt bei 140°C im Vakuum getrocknet. Es wurde ein weißes Pulver erhalten.

Der Anteil an Einheiten mit Säuregruppen wurde mittels ¹H-NMR zu 3,1 mol-% bestimmt, die Viskositätszahl des Produkts betrug 37,1 ml/g.

### Herstellungsbeispiel 3:

### Carboxylseitenketten aufweisender Copolyarylether C₃

Unter Stickstoffatmosphäre wurden 5,742 kg Dichlordiphenylsulfon, 5,076 kg Dihydroxydiphenylsulfon und 305,8 g 4,4-Bis-(4-hydroxyphenyl)valeriansäure in 29 kg N-Methylpyrrolidon gelöst und mit 2,820 kg wasserfreiem Kaliumcarbonat versetzt.

Die Reaktionsmischung wurde bei einem Druck von 300 mbar unter ständigem Abdestillieren des Reaktionswassers und N-Methylpyrrolidon zunächst 1 h auf 180°C erhitzt und dann 6 h bei 190°C weiter umgesetzt.

Nach Zugabe von 40 kg N-Methylpyrrolidon wurden die anorganischen Bestandteile abfiltriert. Durch Zugabe von 300 ml Eisessig wurden basische Gruppen neutralisiert, anschließend wurde das Polymer durch Fällung in Wasser isoliert. Nach 3-maliger Extraktion mit Wasser wurde das Produkt bei 140°C im Vakuum getrocknet. Es wurde ein weißes Pulver erhalten.

Der Anteil an Einheiten mit Säuregruppen wurde mittels ¹H-NMR zu 3,0 mol-% bestimmt, die Viskositätszahl des Produkts betrug 40,2 ml/g.

### Anwendungsbeispiel:

### Herstellung und Prüfung der Formmassen

Unter Verwendung der Komponenten C₁, C₂ und C₃ aus den Herstellungsbeispielen sowie der im folgenden genannten Komponenten A₁, A₂, B, C* und E wurden erfindungsgemäß Formmassen 1 bis 5 und Vergleichsformmassen V1 bis V7 hergestellt und auf ihre Eigenschaften getestet.

### Komponente A₁:

Als Polyarylenether A₁ wurde Ultrason S 2010 (Handelsprodukt der BASF AG) verwendet. Dieses Produkt ist charakterisiert durch eine Viskositätszahl von 56 ml/g, gemessen in 1%iger NMP-Lösung bei 25°C. Es umfaßt überwiegend Einheiten der Formel I₂.

### Komponente A₂:

Als Polyarylenether A₂ wurde Ultrason E 1010 (Handelsprodukt der BASF AG) verwendet. Dieses Produkt ist charakterisiert durch eine Viskositätszahl von 49 ml/g, gemessen in 1%iger NMP-Lösung bei 25°C. Es umfaßt überwiegend Einheiten der Formel I₁.

### Komponente B:

Polyphenylensulfid, E-Modul = 3200 N/mm², z.B. Handelsprodukt Fortron 0214, Hoechst.

### Komponente C*:

Komponente A₁ aus der DE 4420643.

### Komponente E:

Glasfaserroving einer Dicke von 10 µm aus E-Glas, die mit einer Schlichte aus Polyurethan ausgerüstet waren. Nach dem Einarbeiten lagen die mittleren Längen der Glasfaser etwa zwischen 0,1 und 0,5 mm.

Die Komponenten wurden in einem Zweiwellenextruder bei einer Massetemperatur von 300 bis 350°C gemischt. Die Schmelze wurde durch ein Wasserbad geleitet und granuliert.

Die Polysulfon enthaltenden Formmassen wurden bei einer Massetemperatur von 310°C verarbeitet, während die Polyethersulfon enthaltenden Formmassen bei 350°C verarbeitet wurden. Die Formtemperatur war jeweils 100°C.

Die Wärmeformbeständigkeit der Proben wurde mittels der Vicat-Erweichungstemperatur ermittelt. Die Vicat-Erweichungstemperatur wurde nach DIN 53 460, mit einer Kraft von 49,05 N und einer Temperatursteigerung von 50 K je Stunde, an Normkleinstäben ermittelt.

Die Reißfestigkeit und Reißdehnung der Produkte wurde nach ISO 527 an Zugstäben ermittelt. Die Schlagzähigkeit der Produkte wurde an ISO-Stäben nach ISO 179 neu bestimmt. Zur Charakterisierung der Fließfähigkeiten der Produkte wurden die MVI-Werte nach DIN 53 735 bei 300 bzw. 320°C und 21,6 kg Belastung ermittelt.

Die Schädigungsarbeit (W_{S}) wurde bei unverstärkten Proben an Rundscheiben nach DIN 53 443 ermittelt.

Die Wasseraufnahme der Proben wurde an Schulterstäben, die für 14 Tage in siedendem Wasser gelagert waren, bestimmt.

Die Chemikalienbeständigkeit der Produkte wurde durch 1-stündige Lagerung von Formkörpern in N-Methylpyrrolidon charakterisiert. Dabei wurde die eintretende Gewichtsabnahme des Formkörpers als Maß für die Chemikalienresistenz ermittelt.

Die Zusammensetzungen der Formmassen und die Ergebnisse der Prüfungen sind in den Tabellen 1 bis 2 aufgeführt.

**Tabelle 1**

| Unverstärkte Formmassen | | | | | | |
|---|---|---|---|---|---|---|
| Formmasse Nr. | V1 | 1 | 2 | V2 | 3 | V3 |
| Komponente [Gew.-%] | | | | | | |
| A₁ | 80 | 70 | 70 | - | - | - |
| A₂ | - | - | - | 80 | 70 | 70 |
| B | 20 | 20 | 20 | 20 | 20 | 20 |
| C₁ | - | 10 | - | - | - | - |
| C₂ | - | - | 10 | - | - | - |
| C₃ | - | - | - | - | 10 | - |
| C* | - | - | - | - | - | 10 |
| Vicat B [°C] | 184 | 184 | 185 | 215 | 215 | 215 |
| E-Modul [N/mm²] | 2850 | 2860 | 2840 | 2900 | 2870 | 2840 |
| W_{S} [Nm] | 12 | 43 | 49 | 23 | 72 | 63 |
| MVI^{*1} [ml/10'] | 102 | 109 | 107 | 108 | 117 | 112 |
| Masserverlust in NMP [%] | 10,2 | 4,5 | 3,9 | 7,6 | 3,1 | 6,8 |
| Wasseraufnahme [%] | 0,6 | 0,6 | 0,6 | 1,4 | 1,4 | 1,4 |
| MVI^{*1}: V1 bis 2: Meßtemperatur 300°C V2, 2, V3: Meßtempertur 320°C V1,V2,V3: Vergleichsversuche | | | | | | |

**Tabelle 2**

| Verstärkte Formmassen | | | | | | |
|---|---|---|---|---|---|---|
| Formmasse Nr. | V4 | V5 | 4 | 5 | V6 | V7 |
| Komponente [Gew.-%] | | | | | | |
| A₂ | 70 | 49 | 44 | 39 | 44 | 60 |
| B | - | 21 | 21 | 21 | 21 | - |
| C₃ | - | - | 5 | 10 | - | 10 |
| C* | - | - | - | - | 4 | - |
| E | 30 | 30 | 30 | 30 | 30 | 30 |
| Vicat B [°C] | 222 | 222 | 221 | 222 | 221 | 222 |
| E-Modul [N/mm²] | 8830 | 10150 | 10100 | 10260 | 10200 | 9550 |
| Zugfestigkeit [N/mm²] | 131 | 151 | 165 | 169 | 153 | 163 |
| aₙ [kJ/m²] | 32 | 34,2 | 45 | 54 | 39 | 48,3 |
| MVI^{*1} [ml/10'] | 36 | 65 | 69 | 74 | 65 | 37 |
| Masserverlust in NMP [%] | 6,9 | 5,2 | 3,2 | 2,3 | 5,0 | 6,8 |
| Wasseraufnahme [%] | 1,3 | 0,8 | 0,8 | 0,8 | 0,8 | 1,4 |
| MVI^{*1}: Meßtemperatur 320°C aₙ = Schlagzähigkeit | | | | | | |

Die erfindungsgemäßen Formmassen zeichnen sich durch verbesserte Zähigkeit und insbesondere durch bessere Chemikalienresistenz aus.

## Patentansprüche

1. Thermoplastische Formmassen, enthaltend
A) wenigstens einen Polyarylenether und
B) wenigstens ein Polyarylensulfid, dadurch gekennzeichnet, daß die Formmasse eine die Chemikalienresistenz erhöhende Menge von
C) wenigstens einem Carboxylgruppen aufweisenden, modifizierten Polyarylenether mit wiederkehrenden Einheiten der Formeln I und II 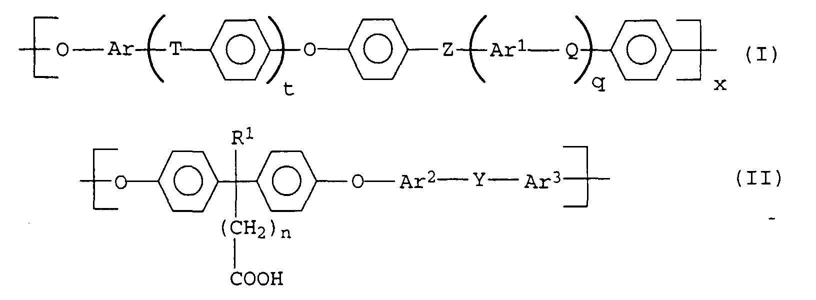 umfaßt, worin
x für 0,5 oder 1 steht,
t und q unabhängig voneinander für 0, 1, 2 oder 3 stehen,
n für eine ganze Zahl von 0 bis 6 steht,
Q, T, Y und Z unabhängig voneinander jeweils eine chemische Bindung oder eine Gruppe, ausgewählt unter -O-, -S-, -SO₂-, S=O, C=O, -N=N-, -R^{a}C=CR^{b}- und CR^{c}R^{d}-, bedeuten, wobei
R^{a} und R^{b} unabhängig voneinander jeweils für ein Wasserstoffatom oder eine C₁-C₁₂-Alkylgruppe stehen und
R^{c} und R^{d} unabhängig voneinander jeweils für ein Wasserstoffatom oder eine C₁-C₁₂-Alkyl-, C₁-C₁₂-Alkoxy- oder C₆-C₁₈-Arylgruppe stehen, wobei R^{c} und R^{d} gegebenenfalls unabhängig voneinander mit Fluor- und/oder Chloratomen substituiert sind oder gegebenenfalls zusammen mit dem C-Atom an das sie gebunden sind, eine C₃-C₁₂-Cycloalkylgruppe bilden, die gegebenenfalls mit einer oder mehreren C₁-C₆-Alkylgruppen substituiert ist,
mit der Maßgabe, daß mindestens eine der Gruppen T, Q und Z für -SO₂- oder C=O steht und, wenn t und q für 0 stehen, Z für -SO₂- oder C=O steht,
Ar, Ar¹, Ar² und Ar³ unabhängig voneinander für C₆-C₁₈-Arylengruppen stehen, wobei diese gegebenenfalls mit C₁-C₁₂-Alkyl-, C₆-C₁₈-Aryl-, C₁-C₁₂-Alkoxygruppen oder Halogenatomen substituiert sind,
R¹ für H, C₁-C₆-Alkyl, oder -(CH₂)ₙ-COOH steht; und
wobei das molare Verhältnis von Einheiten der Formel I zu Einheiten der Formel II im Bereich von 0,05:99,95 bis 99,95:0,05 liegt.

2. Formmasse nach Anspruch 1, dadurch gekennzeichnet, daß der modifizierte Polyarylenether C) einen Anteil freie Säuregruppen enthaltende Einheiten der Formel II von etwa 0,05 bis 25 mol-%, bestimmt durch ¹H-NMR, aufweist.

3. Formmasse nach einem der vorherigen Ansprüche, dadurch gekennzeichnet, daß der modifizierte Polyarylenether C) Strukturelemente der Formel II umfaßt, worin Ar² und Ar³ jeweils für 1,4-Phenylen, Y für SO₂, R¹ für C₁-C₆-Alkyl und n für eine ganze Zahl von 1 bis 6 steht.

4. Formmasse nach einem der vorherigen Ansprüche, dadurch gekennzeichnet, daß der Polyarylenether A) aus wiederkehrenden Strukturelementen obiger Formel I aufgebaut ist, wobei Ar, Ar¹, T, Q, Z, t und q die oben angegebenen Bedeutungen besitzen.

5. Formmasse nach einem der vorherigen Ansprüche, dadurch gekennzeichnet, daß die Einheiten der Formel I in den Komponenten A) und C) unabhängig voneinander ausgewählt sind unter Einheiten der Formel I₁ und I₂ 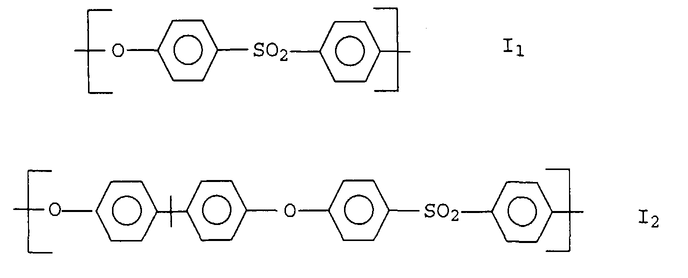 oder Gemischen davon.

6. Formmasse nach Anspruch 5, dadurch gekennzeichnet, daß der Polyarylenether A) einen Gehalt an HO-Endgruppen von weniger als 0,03 Gew.-%, bezogen auf das zahlenmittlere Molekulargewicht des Polyarylenethers, aufweist.

7. Formmasse nach einem der vorherigen Ansprüche, dadurch gekennzeichnet, daß Polyarylensulfid zu mehr als etwa 30 Mol-% wiederkehrende Einheiten der Formel IV 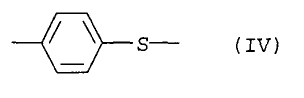 umfaßt.

8. Formmasse nach einem der vorherigen Ansprüche, enthaltend, jeweils bezogen auf das Gesamtgewicht der thermoplastischen Formmasse
A) etwa 5 bis etwa 95 Gew.-% wenigstens eines Polyarylenethers,
B) etwa 4 bis etwa 75 Gew.-% wenigstens eines Polyarylensulfids,
C) etwa 1 bis etwa 50 Gew.-% wenigstens eines Polyarylenethers mit Carboxylgruppen,
D) 0 bis etwa 60 Gew.-% wenigstens eines faser- oder teilchenförmigen Füllstoffs oder deren Mischungen,
E) 0 bis etwa 45 Gew.-% wenigstens eines schlagzähmodifizierenden Kautschuks, und
F) 0 bis etwa 40 Gew.-% wenigstens eines üblichen Zusatzes.

9. Verwendung von Formmassen nach einem der vorherigen Ansprüche zur Herstellung von Fasern, Filmen und Formkörpern.

10. Fasern, Filme und Formkörper, hergestellt unter Verwendung einer Formmasse nach einem der Ansprüche 1 bis 8.

11. Formkörper nach Anspruch 10, ausgewählt unter Haushaltsartikeln, elektronischen Bauteilen, Laborgeräten, medizinischtechnischen Geräten oder Teilen davon sowie Kraftfahrzeug- und Maschinenbauteilen.
